# EUROPÄISCHE PATENTSCHRIFT

(11) **EP 1 503 178 B1**
(45) Veröffentlichungstag und Bekanntmachung des Hinweises auf die Patenterteilung: **07.06.2006**
(21) Anmeldenummer: 04103273.1
(22) Anmeldetag: 09.07.2004
(51) Int. Cl.: G01C 21/34, G09B 29/10

(54) **Verfahren zur Klassifikation von Routensegmenten eines Navigationssystems und ein entsprechendes Navigationssystem**
Method for classifying road segments of a navigation system and a corresponding navigation system
Procédé pour classifier des segments d'une route d'un système de navigation et un système de navigation correspondant

(30) Priorität: 30.07.2003 DE 10334829
(43) Veröffentlichungstag der Anmeldung: 02.02.2005
(73) Patentinhaber: SIEMENS AKTIENGESELLSCHAFT, 80333 München (DE)
(72) Erfinder: Lauther, Ulrich, 80686 München (DE)

(56) Entgegenhaltungen:
- DE-A1- 10 052 934
- US-A1- 2002 059 025
- US-A1- 2002 169 543

## Beschreibung

Verfahren zur Klassifikation von Routensegmenten eines Navigationssystems und ein entsprechendes Navigationssystem

Die Erfindung betrifft ein Verfahren für ein Navigationssystem sowie ein entsprechendes Navigationssystem, bei dem unter Einbeziehung unterschiedlicher Routenabschnittsklassen eine möglichst kurze Gesamtroute zwischen einem Start- und Zielknoten ermittelt wird.

Ein solches Navigationssystem ist aus der deutschen Offenlegungsschrift DE 196 21 437 A1 bekannt.

In einem solchen Navigationssystem werden üblicherweise Straßenklassen bzw. Layer dazu benutzt, die Verarbeitungsgeschwindigkeit zu erhöhen und die schnell zugreifbaren Datenmengen zu beschränken, wobei dies beispielsweise dadurch geschieht, dass in der Nähe von Start und Ziel alle Straßen und in einiger Entfernung von Start und Ziel nur noch "wichtige" Straßen, zum Beispiel Autobahnen, berücksichtigt werden. Die hierzu notwendige Klassifikation der Straßen wird hierbei üblicherweise vom Kartenhersteller geliefert und orientiert sich an vorgegebenen Straßenattributen, wie beispielsweise Autobahn, Bundesstraße usw. Eine derartige Klassifikation drückt aber nicht unbedingt eine Signifikanz für eine kürzeste Route aus und führt so oftmals zu unnötig langen Fahrten. Übertrieben ausgedrückt, führt bei diesem Vorgehen in Frankreich jede Route von A nach B über Paris.

Zur Vermeidung dieser Probleme wurde bislang eine manuelle Korrektur der Straßenklassifikation, vor allem als Reaktion auf Kundenbeschwerden, vorgenommen.

Die der Erfindung zugrundeliegende Aufgabe besteht nun darin, ein Verfahren zur Klassifikation von Routensegmenten in einem Navigationssystem und eine entsprechendes Navigationssystem anzugeben, bei dem die Auswahl der Routensegmente verbessert bzw. eine manuelle Korrektur weitgehend vermieden wird.

Diese Aufgabe wird durch die Merkmale des Patentanspruchs 1 erfindungsgemäß gelöst. Die weiteren Patentansprüche beziehen sich auf bevorzugte Ausgestaltungen des erfindungsgemäßen Verfahrens und auf ein entsprechendes Navigationssystem.

Die Erfindung besteht im Wesentlichen darin, dass ausgehend von konventionellen Straßenklassen, also von der zu erwartenden Fahrgeschwindigkeit eines jeweiligen Straßensegments, automatisch für alle Straßensegmente eine Signifikanz ermittelt wird, wobei die Grundidee darin besteht, dass ein Straßensegment signifikant ist, wenn es "in der Mitte" eines "langen" kürzesten Pfades vorkommt.

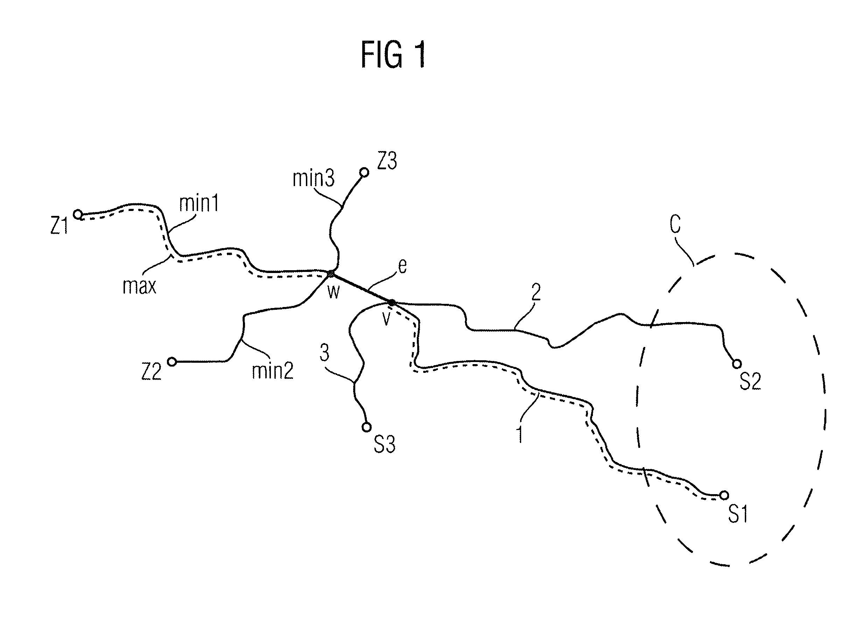

Im Folgenden wird die Erfindung anhand der Zeichnung näher erläutert.

In der Zeichnung sind drei Startknoten S1, S2 und S3 sowie drei Zielknoten Z1, Z2 und Z3 dargestellt, die über entsprechende kürzeste Verbindungspfade 1, 2 und 3 verbunden sind. Die beiden Startknoten S1 und S2 gehören hier beispielhaft einem gemeinsamen Cluster C an, das zur Vereinfachung der Berechnung als gemeinsamer Startbereich bei der Suche der kürzesten Pfade verwendet werden kann.
Die kürzesten Verbindungsrouten 1 bis 3 weisen alle ein jeweiliges gemeinsames Routensegment e auf, wobei die Endpunkte des Routensegments mit v und w bezeichnet sind.

Beim erfindungsgemäßen Verfahren werden zunächst alle kürzesten Pfade, zum Beispiel die Pfade 1, 2 und 3, in einem Straßennetz berechnet, wobei jeder dieser Pfade einen Startknoten sowie einen Zielknoten aufweist.

Zur Berechnung aller kürzesten Pfade kann beispielsweise mit Hilfe des an sich hinlänglich bekannten Dijkstra-Algorithmus ein Baum kürzester Pfade berechnet werden, was jedoch häufig zu zeitaufwändig ist. Von Vorteil ist es für benachbarte Knoten S1 und S2 zunächst Cluster zu bilden und dann für alle Knoten dieser Cluster die Pfadberechnung gemeinschaftlich durchzuführen. Die Ergebnisse stellen meist eine hinreichend genaue Näherungen für die kürzesten Pfade dar.

Gleichzeitig wird für alle Routensegmente, bspw. das Routensegment e, die maximale Entfernung max zu einem Start- oder Zielknoten in irgendeinem dieser kürzesten Pfade bestimmt. Es wird also beim Pfad 1 die Entfernung zwischen dem Startknoten S1 und dem Punkt v des Routensegments e sowie die Entfernung zwischen dem Punkt w des Routensegments e und dem Zielknoten Z1 ermittelt und aus beiden Entfernungen das jeweilige Minimum min1 gebildet. In entsprechender Weise erfolgt dies auch für alle anderen kürzesten Pfade, beispielsweise die Pfade 2 und 3, wobei die minimalen Entfernungen min2 und min3 bestimmt werden.

Aus den Minimalentfernungen aller kürzesten Pfade wird nun die Maximalentfernung max der minimalen Entfernungen min1, min2 und min3 für das Routensegment e ermittelt. Dies geschieht für alle Routensegmente.

Daraufhin werden alle Routensegmente absteigend nach ihrer jeweiligen Maximalentfernung sortiert. Je weiter vorne ein Segment in dieser Sortierreihenfolge liegt, desto höher ist die Signifikanz des Segments.

Die Routensegmente können somit aufgrund ihrer Signifikanz bestimmten Klassen bzw. Layern zugeordnet werden, wobei dies beispielsweise dadurch geschieht, dass die ersten x Prozent der so sortierten Segmente dem ersten Layer, die nächsten y Prozent dem zweiten Layer usw. zugeordnet werden.

Die Routen bzw. Routensegmente sind dabei typischerweise Straßen bzw. Straßensegmente in Navigationsystemen für PKWs oder LKWs. Die Erfindung läßt sich aber prinzipiell in allen Navigationssystemen, z.B. auch in Schiffen oder Flugzeugen, anwenden, deren Routensegmente bspw. unterschiedliche maximale Fortbewegungsgeschwindigkeiten zulassen.

## Patentansprüche

1. Verfahren zur Klassifikation von Routensegmenten eines Navigationssystems,
- bei dem zunächst alle kürzesten Pfade (1, 2, 3,..) in einem Routennetz berechnet werden, wobei jeder dieser Pfade einen Startknoten (S1,S2,S3,..) und einen Zielknoten (Z1,Z2,Z3,...) oder ein Startgebiet (C) aufweist,
- bei dem
a) für ein jeweiliges Routensegment (e) innerhalb aller kürzesten Pfade (1,2,3), die dieses jeweilige Routensegment beinhalten, die Entfernungen zwischen dem jeweiligen Routensegment und den Startknoten und zwischen dem jeweiligen Segment und den Zielknoten bestimmt werden,
b) aus den jeweiligen beiden Entfernungen eines jeweiligen kürzesten Pfades eine jeweilige minimale Entfernung (min1, min2, min3) bestimmt wird,
c) aus allen zum jeweiligen Routensegment gehörenden minimalen Entfernungen wiederum eine maximale Entfernung (max) als signifikante Größe für das jeweilige Segment (e) ermittelt wird,
- bei dem die Schritte a) bis c) für alle Routensegmente aller kürzesten Pfade durchgeführt werden und
und bei dem die Routensegmente nach ihrer Maximalentfernung sortiert und Routenklassen zugeordnet werden.

2. Verfahren nach Anspruch 1,
bei dem die kürzesten Pfade im Routennetz nach dem Dijkstra-Algorithmus berechnet werden.

3. Verfahren nach Anspruch 1 oder 2,
bei dem mindestens ein Startgebiet (C) aus einem Cluster von mehreren Startknoten (S1, S2) gebildet wird.

4. Verfahren nach einem der vorhergehenden Ansprüche,
bei dem die Segmente **dadurch** klassifiziert werden, dass die ersten x Prozent einer ersten Klasse, die nächsten y Prozent einer zweiten Klasse usw. zugeordnet werden.

5. Verfahren nach einem der vorhergehenden Ansprüche,
bei dem die Routen bzw. Routensegmente aus Straßen bzw. Straßensegmenten bestehen, die mit PKWs befahrbar sind.

6. Navigationssystem zur Suche einer kürzesten Route zwischen einem Startknoten und einem Zielknoten,
bei dem Routensegmente der Route nach einem der vorhergehenden Verfahren klassifiziert wurden.

## Claims

1. Method for classifying route segments in a navigation system,
- in which all of the shortest paths (1,2, 3,...) are first calculated in a route network, with each of these paths comprising a start node (S1 S2, S3,...) and a destination node (Z1, Z2, Z3,...) or a start area (C),
- in which
a) for a respective route segment (e) within all of the shortest paths (1, 2, 3), which contain this respective route segment, the distances between the respective route segment and the start nodes and between the respective segment and the destination nodes are determined,
b) a respective minimal distance (min1, min2, min3) is determined from the respective two distances of a respective shortest path,
c) a maximum distance (max) is determined from all minimal distances in turn belonging to the respective route segment, as a significant variable for the respective segment (e),
- in which the steps a) to c) are carried out for all route segments of all the shortest paths and in which the route segments are sorted according to their maximum distance and assigned to route classes.

2. Method according to claim 1,
in which the shortest paths are calculated in the route network according to the Dijkstra algorithm.

3. Method according to claim 1 or 2,
in which at least one start area (C) is formed from a cluster of several start nodes (S1, S2).

4. Method according to one of the preceding claims, in which the segments are classified in that the first x percent is assigned to a first class and the next y percent is assigned to a second class etc.

5. Method according to one of the preceding claims, in which the routes or route segments consist of roads or road segments which are accessible to cars.

6. Navigation system for searching for the shortest route between a start node and a destination node, in which route segments of the routes are classified according to one of the preceding methods.

## Revendications

1. Procédé pour la classification de segments d'itinéraire d'un système de navigation,
- dans lequel on calcule d'abord tous les chemins (1, 2, 3, ...) les plus courts dans un réseau routier, chacun de ces chemins comprenant un point de départ (S1, S2, S3,...) et un point d'arrivée (Z1, Z2, Z3,...) ou une zone de départ (C),
- dans lequel :
a) pour un segment d'itinéraire (e) à l'intérieur de tous les chemins (1, 2, 3) les plus courts qui comportent ce segment d'itinéraire, on détermine les distances entre le segment d'itinéraire et les points de départ et entre le segment et les points d'arrivée,
b) à partir de chacune des deux distances d'un chemin le plus court, on détermine une distance minimale correspondante (min1, min2, min3),
c) à partir de toutes les distances minimales appartenant au segment d'itinéraire, on détermine de nouveau une distance maximale (max) comme valeur de pertinence pour le segment (e),
- dans lequel les étapes a) à c) sont réalisées pour tous les segments d'itinéraires de tous les chemins les plus courts et dans lequel les segments d'itinéraire sont triés selon leur distance maximale et sont attribués à des classes d'itinéraires.

2. Procédé selon la revendication 1 dans lequel les chemins les plus courts sont calculés dans un réseau routier selon l'algorithme de Dijkstra.

3. Procédé selon la revendication 1 ou 2 dans lequel au moins une zone de départ (C) est formée à partir d'un groupe de plusieurs points de départ (S1, S2).

4. Procédé selon l'une quelconque des revendications précédentes dans lequel les segments sont classifiés de telle façon que les premiers x pour-cent sont attribués à une première classe, les y pour-cent suivants sont attribués à une deuxième classe, etc..

5. Procédé selon l'une quelconque des revendications précédentes dans lequel les itinéraires ou les segments d'itinéraire consistent en des routes ou en segments de route praticables par les automobiles.

6. Système de navigation pour la recherche d'un itinéraire le plus court entre un point de départ et un point d'arrivée dans lequel des segments d'itinéraire de l'itinéraire ont été classifiés selon un des procédés précédents.
